# EUROPEAN PATENT APPLICATION

(11) **EP 2 503 545 A1**
(43) Date of publication of application: **26.09.2012**
(21) Application number: 11159062.6
(22) Date of filing: 21.03.2011
(51) Int. Cl.: G10L 17/00, G06F 1/16, G06F 17/30, G06K 9/00

(54) **Arrangement and method relating to audio recognition**

(71) Applicant: Sony Ericsson Mobile Communications AB, 221 88 Lund (SE)
(72) Inventor: Norén, Hanshenric, 221 88, Lund (SE)
(74) Representative: Egeröd, Lisbeth

(57) **Abstract**

The present invention relates to an arrangement and a method in an image and sound recording device (100). The method comprises: compering a sound signal with a stored set of sound signals, at least one of said stored set of signals corresponding to a data set comprising information about said stored set of signal, and providing said recorded image with said information if a substantial match is found during said comparison.

## Description

### TECHNICAL FIELD

The present invention generally relates to an information retrieval arrangement, and in particular to a communication arrangement which uses received audio information for identifying an object, in particular a person.

### BACKGROUND

Many of today communication devices, such as cellular phones, or entertainment devices have a capability to capture sounds and images. For example, a user may use his or her cellular phone to record an event for a later playback. In such a case, the sounds associated with the event may be captured using a microphone embedded in the cellular phone or entertainment devices, or a "headset" comprising one or several microphones connected to the device.

Face recognition is well known and used, for example for tagging people to internet communities such as FACEBOOK. Characteristics of a face of a person whose image is taken is compared with a database containing face characteristics and identification information. However, face recognition Is not possible always; especially when a face is not entirely visible. Moreover, face recognition requires more from the equipment.

### SUMMARY

There is a need for identifying a sound source when using an image recorder and providing it with identification information. Especially, there is need for providing an image of a person with identification information using person's voice or speech.

For this reasons a method in an image and sound recording device. The method comprises: compering a sound signal with a stored set of sound signals, at least one of the stored set of signals corresponding to a data set comprising information about the stored set of signal, and providing the recorded image with the information if a substantial match is found during the comparison. The sound signal may be a voice of a person. The information may be identity information. The method may further comprise determining a direction to or position of the person based on source of voice. The comparison may be executed internally or externally. At least two microphones may be used for the determination of direction or position. In one embodiment the information is linked to the image as a tag. If no match is found, the information may be provided manually. The information may be acquired and provided in real time.

The invention also relates to an arrangement for recording image and sound from an image recorder and a sound recorder. The arrangement is configured to compare the recorded sound with stored sound data and a portion for providing the image with information based on the sound data comparison. The arrangement may comprise a controller for receiving the recorded sound and extracting voice data from the sound, and a comparator for comparing the extracted voice data with stored voice data. The arrangement may comprise one or several microphones. The arrangement may comprise an arrangement for determining direction or position of the sound. The one or several microphones communicate with the arrangement wirelessly.

The invention also relates to a mobile terminal comprising such an arrangement.

### BRIEF DESCRIPTION OF THE DRAWINGS

In the following the invention will be described in a non-limiting way and in more detail with reference to exemplary embodiments illustrated in the enclosed drawings, in which:
Fig. 1 illustrates schematically a mobile terminal according to one aspect of the present invention;
Fig. 2 illustrates schematically a device according to the present invention;
Fig. 3 illustrates schematically a screen of a device according to the present invention; and
Fig. 4 illustrates method steps according to the present invention.

### DETAILED DESCRIPTION

In the following terms tag and/or tagging relates to providing an entity with information, especially identification information. Especially the invention relates to providing an image of a person with information and in particular identification information using face recognition and/or voice recognition. However, in the following description the invention is detailed exemplifying only voice recognition and tagging as face recognition is assumed well known for a skilled person.

Thus, the present invention provides methods and arrangements for tagging image(s) of a person(s) in real time, e.g. on the camera display during a video recording. The invention may also be used for tagging other objects, such as animals (pets), nature sound etc.

In the following, the voice tagging input system and method of the present invention is described in association with an operation of a mobile phone. However, the voice tagging input system and method can be used with other devices that have a voice recording system and preferably a camera for taking an image and memory for storing representative voice and images matching corresponding instructions. For example, voice recognition and tagging input system and method according to the invention can be implemented with any information processing devices such as a cellular phone, mobile terminal, Digital Multimedia Broadcasting (DMB) receiver, Personal Digital Assistant (PDA), computer, tablet, smartphone, etc.

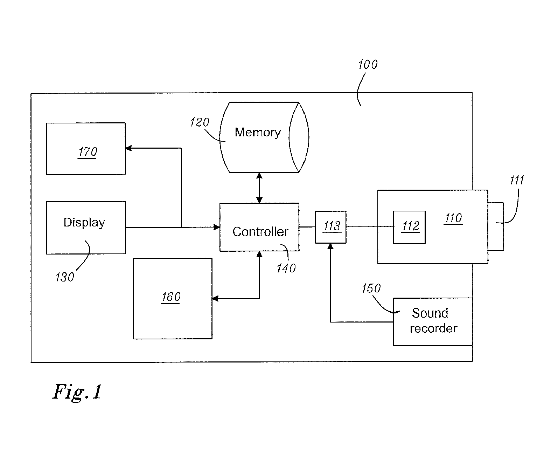

Fig. 1 is a block diagram illustrating a voice recognition and tagging input system for a digital camera, for example incorporated in a mobile phone 100 according to one embodiment of the present invention. The voice tagging input system includes a camera 110, a memory unit 120, a display 130, a controller 140 and a sound recording device, such as a microphone 150. The microphone may be a part of the camera 110 or mobile phone 100 and the sound may be recorded on the same media as the recorded image.

The mobile phone 100 may also incorporate a communication portion 160 and an interface portion 170. The communication portion 160 is arranged to communicate with a communication network (not shown) in a manner well known for a skilled person and not detailed here in. The interface portion 170 may interact with a user through control bottoms, sound reproduction, etc.

Preferably, the microphone may comprise two or more microphone sets to be used for beaming and binaural recording. However, one microphone set may also be used. Preferably, an array of microphones is used to be able to determine the position of a voice, e.g. by processing the distance between the different microphones and source of sound. Microphones may be incorporated in a so-called "hands-free" device or "headset". The determination process and/or voice recognition may be carried out in the phone or externally in a network, e.g. at a Service Provider (SP) or in a communication network server.

In operation, the camera 110 captures one or several images, e.g. using a lens 101 and photo-sensitive sensor 102 and converts the image into a digital signal by means of an encoder 103. The images may be still or motion pictures.

The camera and microphone may be connected to the device wirelessly.

In this embodiment, the microphone 150 captures sound at same time as the camera and the sound and images are stored, e.g. in a temporarily buffer memory, after being processed in a same or additional encoder 103. The controller processes the recorded sound and extracts voice signals, which will be used to be mapped to a specific voice database so as to be used for voice recognition according to the invention. The controller may also use images for face recognition purposes.

The memory unit 120 may store a plurality of application programs for operating functions of the mobile phone including camera operation applications. The memory unit 120 includes a program memory region and a data memory region.

The program memory region may store an operating system (OS) for managing hardware and software resources of the mobile phone, and application programs for operating various functions associated with multimedia contents such as sounds, still images, and motion pictures, and camera operation applications. The mobile phone activates the applications in response to a user request under the control of the controller 140.

The data memory region may store data generated while operating the applications, particularly the voice and image recognition in corporation with the camera operation application. A portion of the data memory region can be used as the buffer memory for temporarily storing the sound and images taken by the camera.

The display 130 has a screen, e.g. for displaying various menus for the application programs and information input or requested by a user. The display 130 also displays still or motion images taken while viewing an image projected on a camera lens. The display 130 can be a liquid crystal display (LCD). In a case when the LCD is implemented with a touch-screen, the display 130 can be used as an additional input means. The display 130 can display menu windows associated with the application programs so as to allow the user to select options for operating the application programs.

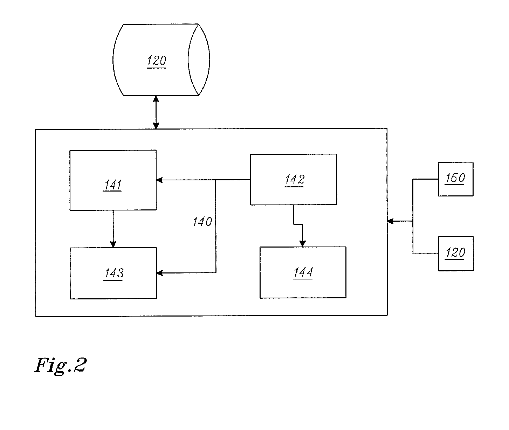

Fig. 2 is a block diagram illustrating the configuration of the recognition according to the present invention, exemplified for recognition of a voice.

The sound data received from the microphone 150 may either be stored in the memory unit 120 or an intermediate memory or directly be processed by the controller 140.

The controller 140 may include, as applications in software or hardware, a tag generator 141, a voice mapper 142 for mapping the voice extracted from the sounds to a corresponding voice database, a voice comparator 143 for comparing input voice taken by the microphone to the voices stored in a voice database, and a tagging application 144 for providing the image recorded by the camera with information.

As the microphone(s) also receive surrounding sound, for example, assuming that the recorded person is in a busy city street the voice of a target person must be extracted in some way. The sounds are received by the microphone, and converted into a corresponding signal. The signal can also be affected by the specific performance characteristics of the microphone(s). The combined signal, including the speech utterances and background noises from the city street, is then transmitted to the controller or a service provider.

In one example, once received by the controller, the controller can perform speech recognition, SR, by taking into account the background noise data of the environment in addition to any known performance characteristics. For example, the controller can search for a stored series of background noises associated with the background environment. Once the controller determines a background noise that matches the noise presented in the received signal, i.e., the environment, the controller can use the corresponding background noise data for use in a compensation technique when performing SR. Furthermore, the controller can take into account distortion associated with features of the camera/microphone (receiver). For example, the controller can determine performance characteristics, such as the type of transducer (or speaker) associated with the receiver, and compensate for distortion caused by a difference in the transducer and a transducer used to train a speech recognition model. Accordingly, by using the known background noise data and transducer and/or speaker in conjunction with SR technique, the controller can more accurately interpret and implement a voice.

In addition to simply storing background noises corresponding to the environment, the controller can also store a probability that the background noise will occur. The probabilities can be based on a time of day, for instance, in the above example, the probability that a noise is a busy city street background noise, can be the highest during a period, when the user is prone to walk along the city streets every week day. Accordingly, if the controller receives voice signal during this period of time, the probability that any voice received from the microphone will include busy city street background noise will be high. However, if the controller receives voice signal in the early morning or evening of a work day, while the user is prone to be in another place, the probability of busy city street background noises may be small, while the probability of other background noises may be high.

This is only one example of extracting or isolation of voice signals to be further processed for voice recognition.

In operation, the controller may execute voice recognition operation on an extracted voice signal by comparing it with stored voices and stores the result as an identification tag into the memory unit 120 (or another intermediate memory). The tag generator 141 controls the voices of the imaged persons, and selects an identification and may store a tag corresponding to a person, e.g. in the memory 120.

The voice mapper 142 links the collected identification information to the images based on the position of the person(s).

If a person's voice is not recognised, the tag generator or controller may ask the user to input identity information and store voice data and information for feature uses.

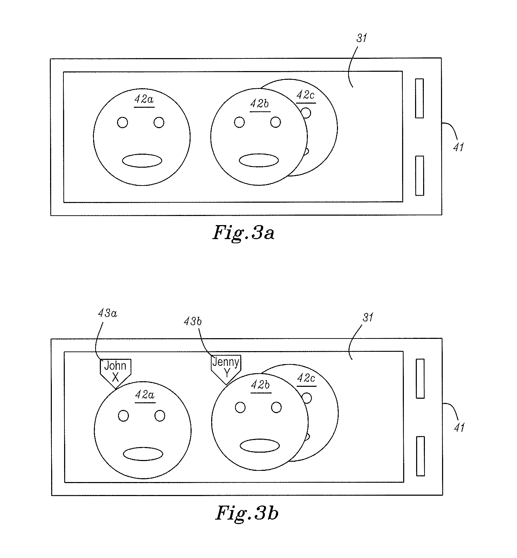

Figs. 3a and 3b are exemplary embodiments of a display 35 of a mobile terminal 41 incorporating the present invention. The camera of the terminal has captured image of a number of persons 42a-42c. Using the microphone(s) (not shown) of the terminal 41, position of the persons may be determined. The captured sound is analysed to recognise the voice of the persons, e.g. as described earlier. The voice recognition may be carried out together with a face recognition process or standalone. When voices (and/or faces) are recognized the images are provided with tags 43a, 43b, e.g. persons name. The tags may be invisible and displayed moving a marker over the image or only stored in the image data set.

One feature of the invention is that it allows for identifying and tagging a person who is not visible and face recognition cannot be carried out. For example person 42c behind person 42b and if that person speaks, it will be possible to tag him/her as well.

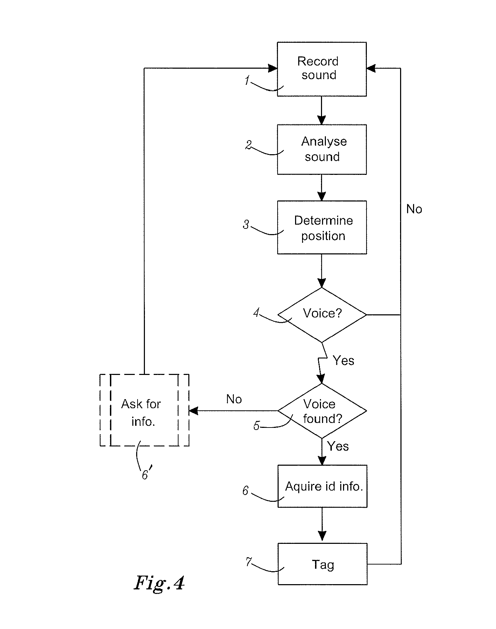

Thus, a generalized method of the invention illustrated in Fig. 4 includes the steps of:
(1) Acquiring sound (recording) using one or several microphones,
(2) Analysing the sound and looking up for voice(s) data,
(3) Determine voice direction and/or position,
(4) If voice data found,
(5) Comparing it with stored voice data,
(6) If voice data matches acquiring id information, or
(6') Asking for id information or go to (1), and
(7) Providing image data with identity information based on said match.
   (6') may be an optional step.

The various embodiments of the present invention described herein is described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented at least in part by means of both hardware and software, and that several "means", "units" or "devices" may be represented by the same item of hardware.

Software and web implementations of various embodiments of the present invention can be accomplished with standard programming techniques with rule-based logic and other logic to accomplish various database searching steps or processes, correlation steps or processes, comparison steps or processes and decision steps or processes. It should be noted that the words "component" and "module," as used herein and in the following claims, is intended to encompass implementations using one or more lines of software code, and/or hardware implementations, and/or equipment for receiving manual inputs.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method in an image and sound recording device (100), the method comprising:
• compering a sound signal with a stored set of sound signals, at least one of said stored set of signals corresponding to a data set comprising information about said stored set of signal,
• providing said recorded image with said information if a substantial match is found during said comparison.

2. The method of claim 1, wherein said sound signal is a voice of a person.

3. The method of claim 1 or 2, wherein said information is identity information.

4. The method according to any of preceding claims, further comprising determining a direction to or position of said person based on source of voice.

5. The method of claim 1, wherein said comparison is executed internally.

6. The method of claim 1, wherein said comparison is executed externally.

7. The method of claim 4, using at least two microphones for said determination of direction or position.

8. The method according to any of preceding claims, wherein said information is linked to said image as a tag.

9. The method of claim 1, wherein if no match is found, the information is provided manually.

10. The method of claim 1, wherein the information is acquired and provided in real time.

11. An arrangement for recording image and sound from an image recorder (110) and a sound recorder (150), **characterised in that** the arrangement is configured to compare said recorded sound with stored sound data and a portion (144) for providing said image with information based on said sound data comparison.

12. The arrangement of claim 11, comprising a controller (140) for receiving said recorded sound and extracting voice data from said sound, and a comparator (143) for comparing said extracted voice data with stored voice data.

13. The arrangement of claim 11, comprising one or several microphones (150).

14. The arrangement of claim 11, comprising an arrangement for determining direction or position of said sound.

15. The arrangement of claim 12, wherein said one or several microphones communicate with said arrangement wirelessly.

16. A mobile terminal comprising an arrangement according to any of claims 11-15.
